# EUROPEAN PATENT SPECIFICATION

(11) **EP 2 398 747 B1**
(45) Date of publication and mention of the grant of the patent: **03.04.2019**
(21) Application number: 10706195.4
(22) Date of filing: 22.02.2010
(51) Int. Cl.: C03B 37/012, C03B 37/027

(54) **METHOD FOR PRODUCING AND PROCESSING A PREFORM, PREFORM AND OPTICAL FIBER**
VERFAHREN ZUR HERSTELLUNG UND VERARBEITUNG EINER VORFORM, VORFORM UND LICHTWELLENLEITER
Procédé de production et de traitement d'une préforme, préforme et fibre optique

(30) Priority: 22.02.2009 EP 09153385
(43) Date of publication of application: 28.12.2011
(73) Proprietor: Rosendahl Nextrom GmbH, 8212 Pischelsdorf (AT)
(72) Inventor: SANDOZ, Frédéric, CH-2016 Cortaillod (CH); PEDRIDO, Carlos, CH-2017 Boudry (CH); RIBAUX, Philippe, CH-2022 Bevaix (CH); HAMEL, Philippe, CH-2024 St-Aubin-Sauges (CH)
(74) Representative: Kolster Oy Ab
(86) International application number: PCT/EP2010/052220
(87) International publication number: WO 2010/094803

(56) References cited:
- WO-A-2005/102947
- RENNER-ERNY R LABIO DI LOREDANA ET AL: "A novel Technique for active Fibre Production" OPTICAL MATERIALS, ELSEVIER SCIENCE PUBLISHERS B.V. AMSTERDAM, NL, no. 29, 1 March 2006 (2006-03-01), pages 919-922, XP002477508 ISSN: 0925-3467 cited in the application
- DI LABIO L ET AL: "Broadband emission from a multicore fiber fabricated with granulated oxides" APPLIED OPTICS, OSA, OPTICAL SOCIETY OF AMERICA, WASHINGTON, DC, vol. 47, no. 10, 1 April 2008 (2008-04-01) , pages 1581-1584, XP001513142 ISSN: 0003-6935 cited in the application

## Description

The present invention relates to a method for producing and processing a primary, secondary or higher order preform, to such a preform and an optical fiber drawn therefrom.

Fabrication of optical fibers, such as the fibers currently used in ultra high speed data communication networks, is described in [1], Mool C. Gupta, Handbook of PHOTONICS, CRC Press, 1997 Boca Raton, chapter 10.7, pages 445-449. Main process steps of optical fiber fabrication are, fabricating a preform, drawing the fiber from the preform and coating the fiber with a material that protects the fiber from handling and from environmental influences.

In the drawing process, the preform is fed from above into the drawing portion of a furnace while being drawn from the bottom using tractors. The fiber is then wound onto a drum while being monitored for tensile strength. The temperature during draw is typically in the range of 2000°C. After exiting the furnace the fiber is coated with a UV-curable coating before winding on the drum.

According to [1], there are basically three methods to form a preform or blank. The modified chemical vapor deposition process (MCVD), the outside vapour deposition process (OVD) and the vapour-axial deposition process (VAD).

In [2], US 2007/214841 A1, and [3], WO 2005/102947 A1, a further method for producing and processing a preform is described. According to this method a primary preform is inserted into a silica tube. The free space remaining in the silica tube is then filled with silica grain. Next, a condition of reduced pressure is generated within the interior space of the silica tube that is closed, e.g. with adjoiner that holds the primary preform and the silica tube in alignment. Then the assembled unprocessed secondary preform, i.e. the silica tube with the primary preform and the silica grain, is treated with a temperature in the range of 2100 °C to 2250 °C. As a result, the silica grain gets molten and fused to the primary preform, thus forming an overcladding layer on the primary preform. During this process stage, an optical fiber can simultaneously be drawn from the resulting secondary preform. Alternatively the secondary preform can completely be processed, cooled and forwarded to a further site, where the drawing process is performed. The described method advantageously allows producing preforms that are designed for drawing conventional fibers or Photonic Crystal Fibers.

In [4], R. Renner-Erny, L. Di Labio et al: "A novel Technique for active fibre production" OPTICAL MATERIALS, ELSEVIER SCIENCE PUBLISHERS B.V. AMSTERDAM, NL, no. 29, pages 919-922, it is disclosed that with a modification of the methods disclosed in [2] and [3] active fiber devices can be produced. According to this method a silica glass tube forming the future core region of a fibre preform is filled with a powder mix of SiO2, Nd and Al. This tube is mounted in the centre of a larger tube forming the future cladding. The empty space between the two tubes is filled with SiO2 powder. After preheating, the evacuated preform is drawn to a fibre. According to [3], with the preparation step of evacuation and heating at a temperature of 1400°C during one hour a drying process is performed.

In [5], L. Di Labio et al: "Broadband emission from a multicore fiber fabricated with granulated oxides", APPLIED OPTICS, OSA, OPTICAL SOCIETY OF AMERICA, WASHINGTON, DC, vol. 47, no. 10, pages 1581-1584, it is disclosed that with a further modification of the methods disclosed in [2] and [3] a fiber with seven cores can be produced, with each core being fabricated from granulated silica mixed with rare earth oxide.

Also in [5] the preparation step of evacuation and heating at a temperature of 1400°C is recommended.

According to [2], the applied silica grain is a synthetic silica powder that is selected according to the desired properties of the fabricated fiber. It is desired for example, that higher drawing forces can be applied, while the risk of breaking the fiber during the drawing process is reduced.

With the method disclosed in [2], high-quality optical preforms can be fabricated at significantly reduced costs compared to conventional methods. However, it has been found that this method is not uncritical. Since thin-walled silica tubes are applied, there is always a risk of breakage particularly during the process step of melting the silica grain.

However a breakage of a glass tube that has been filled with silica grain typically occurs before the melting point is reached, in which the processed material is softened. A breakage will typically occur during the preparation step described in [4] and [5], in which a high temperature of approx. 1400°C is applied for drying purposes.

Hence, it has been taken care that silica grain with selected properties is applied in order avoid the described problems, which however again leads to a cost increase. E.g., specific amorphous silica, but not quartz, has been used for this purpose.

It would therefore be desirable to provide an improved method for fabricating preforms that involves the step of filling a silica tube with grain that is molten to become part of the fabricated preform.

It would be desirable in particular to provide a method that allows fabricating primary and secondary preforms at significantly reduced cost.

Still further it would be desirable to provide a method that allows the use of silica tubes with thinner walls, while avoiding the risk of breakage or rupture particularly during the step of melting the grain.

Further, it would be desirable to use less costly silica grain that can be selected with reduced limitations except for the required purity grades.

### SUMMARY OF THE INVENTION

The above and other objects of the present invention are achieved by a method according to claim 1.

The inventive method, which relates to producing and processing a preform, comprises two major process phases. In a preliminary process phase, silica grain is supplied into the interior space of a silica tube having an open upper end and a closed lower end, in order to obtain an unprocessed preform. In a final process phase the interior space of the silica tube is closed and evacuated. Then the unprocessed preform is heated with a final process temperature in order to fuse the silica tube and the silica grain.

According to the invention the silica grain entering the interior space is thermally treated during the preliminary process phase with an intermediate process temperature that lies under the melting point of the silica grain.

Preferably, a furnace is provided that his following the fill level of the silica grain during the filling process and that is heating the silica tube and the silica grain in the region of the fill level.

With these measures at least one of the following effects is achieved. The silica grain is evenly accommodated within the interior space of the silica tube. Punctual tensions that could cause a rupture of the silica tube during labour process stages are thus avoided.

Hence, the user may select silica tubes with thinner walls, thus achieving a higher average quality of the preform. The material with lower quality, resulting from the silica tube can be removed from the preform, if desired, with reduced effort.

Preferably the intermediate temperature is selected in such a way that the thermal treatment causes the silica grain to change from a first state to a second state, in which the silica grain takes on a lower material density, i.e. a larger volume. For this purpose the intermediate process temperature is preferably selected in the range between approximately 576°C and 1470°C.

In the event that the silica grain consists of trigonal α-Quartz having a material density of approx. 2,65 g/cm3, then preferably the intermediate process temperature is selected between 576°C and 870°C so that α-Quartz is transformed into hexagonal β-Quartz having a material density of approx. 2,53 g/cm3.

In the event that the silica grain consists of α-Quartz or β-Quartz, then preferably the intermediate process temperature is selected between 870°C and 1470°C so that α-Quartz or β-Quartz is transformed into hexagonal β-Tridymite having a material density of approx. 2,25 g/cm3.

Still further, an intermediate process temperature above 1470°C can be applied to transform silica grain with an initial configuration of α-Quartz, β-Quartz or β-Tridymite into β-Cristobalite having a material density of approx. 2,20 g/cm3.

Due to the thermal treatment the silica grain is evenly accommodated within the interior space of the silica tube and assumes a lower material density that is maintained sufficiently long, even if the temperature is lowered again.

Hence, during the final process phase, in which the final process temperature is applied and the silica grain is molten, an expansion of the mass of the silica grain that could break the silica tube is avoided.

The inventive method therefore yields several advantages and options. First of all, the process reliability is improved, avoiding process failures caused by the breakage of silica tubes. Further, since the forces occurring during the heating and melting process are strongly reduced, the applicant may select silica tubes with thinner walls.

Still further, the user may select the silica grain from a larger variety of products offered by the industry. Considerations concerning the dynamic property of the material can be neglected. Hence, the user may select material such as α-Quartz at lower cost.

The results can further be improved by rotating the silica tube during the filling process with a speed between approximately 50 and 120 turns per minute. Optimal results are achieved in the range of 80-100 turns per minute. With the rotation of the silica tube in a defined range quick and uniform distribution of the silica grain is achieved while avoiding a radial segregation of particles with different sizes, which could occur with higher turning speeds.

The result of the first process phase is an unprocessed preform that consists of the silica tube, which has been filled with thermally processed and evenly distributed silica grain.

The unprocessed preform can further be processed immediately without applying a cooling phase. Hence, after completion of the preliminary process phase, the final process phase can immediately be started by evacuating the silica tube and by fusing the silica tube and the silica grain.

Alternatively the unprocessed preform can be cooled, removed and reinstalled later at the same or another site in order to perform the final process phase.

The inventive method can be used to produce primary, secondary or higher order preforms. Further, preforms can be produced, from which photonic fibers can be drawn.

In the event that a secondary preform shall be produced, then a primary preform or silica blank is inserted into the silica tube and aligned along its longitudinal axis. Then, in the preliminary process phase, silica grain is supplied into the interior space of the silica tube that has been reduced by the volume of the primary preform.

In the event that a preform for photonic fibers shall be produced, then auxiliary silica tubes and/or auxiliary removable rods are inserted into the silica tube and aligned in parallel to its longitudinal axis. Then, in the preliminary process phase, silica grain is supplied into the interior space of the silica tube that has been reduced by the volume of the auxiliary silica tubes and/or auxiliary removable rods, preferably carbon rods. The auxiliary silica tubes and/or auxiliary removable rods are arranged in an at least substantially two-dimensionally periodic structure as required for the photonic fibers. After the final process phase has been completed, the carbon rods are removed leaving longitudinal cylindrical openings in the preform.

In the event that auxiliary silica tubes had been entered into the silica tube to define cylindrical openings in the preform, then it must be taken care that no deformations occur, which would alter the properties of the photonic fiber. Also in this application the use of silica tubes with thinner walls is desirable and can be achieved by applying the inventive method. Using the inventive filling procedure prevents the mass of grain from deforming the outer silica tube and the inner auxiliary silica tubes. Hence, the inventive method is particularly advantages in processes that serve for the production of photonic fibers.

Secondary preforms and preforms designed for photonic fibers can be further processed in the different ways.

The final process phase can be executed and the processed preform can be removed for later handling.

However, the drawing phase can also be applied immediately after termination of the final process phase. In the final process phase, the furnace can be moved along the preform, e.g. from the lower to the upper end of the preform in order to fuse the silica tube and the silica grain. Subsequently the furnace is moved again to the lower end of the preform, which then is heated to a softened state, in which the optical fiber can be drawn from the preform.

As a further alternative, the fiber can be drawn from the preform simultaneously during execution of the final process phase. In this application, the fiber is drawn from the preform, while the silica tube and the silica grain are molten.

In all described variations the inventive method facilitates the handling of the process and provides better process reliability at reduced costs.

### BRIEF DESCRIPTION OF THE DRAWINGS

Some of the objects and advantages of the present invention have been stated, others will appear when the following description is considered together with the accompanying drawings, in which:
- Fig. 1a: shows a thin-walled silica tube 11, having a primary axis x, an interior space 110 and a conical closure 111 at its lower end;
- Fig. 1b: shows the silica tube 11 of figure 1a with the interior space 110 being completely filled in a conventional way with silica grain 5 in order to obtain an unprocessed primary preform 1p';
- Fig. 1c: shows the unprocessed primary preform 1p' of figure 1b being closed by means of an adjoiner 3, through which the interior space 110 of the silica tube 11 has been evacuated, and a furnace 23 that is guided along the primary preform 1p' in order to fuse the silica tube 11 and the silica grain 5 at a temperature between 2100°C and 2350°C;
- Fig. 2a: shows the silica tube 11 of figure 1a with the interior space 110 being filled with grain 5a that is exposed to a temperature below the melting point during the process of filling in order to obtain an unprocessed primary preform 1p;
- Fig. 2b: shows the primary preform 1p of figure 2a being closed by means of an adjoiner 3, through which the interior space 110 of the silica tube 11 has been evacuated, and a furnace 23 that is guided along the primary preform 1p in order to fuse the silica tube 11 and the thermally pre-treated grain 5b at a temperature between 2100°C and 2350°C;
- Fig. 3a: shows the silica tube 11 of figure 1a with a primary preform 1p, 1p' in the interior space 110 that is filled with grain 5a that is exposed to a temperature below the melting point during the process of filling in order to obtain an unprocessed secondary preform 1s;
- Fig. 3b: shows the unprocessed secondary preform 1s of figure 3a after completion of the filling and heating procedures;
- Fig. 3c: shows the unprocessed secondary preform 1s of figure 3b being closed by means of an adjoiner 3, through which the interior space 110 of the silica tube 11 has been evacuated, and a furnace 23 that is guided along the secondary preform 1s in order to fuse the silica tube 11 and the thermally pre-treated grain 5b at a temperature between 2100°C and 2350°C;
- Fig. 4a-4c: show the treatment of the processed primary or secondary preform 1p, 1s, during which a peripheral layer of the preform 1p, 1s, is removed, which consists of material originating from the silica tube 11;
- Fig. 5: shows an apparatus 2 used for drawing an optical fiber 8 from an inventive secondary preform 1s as shown in figure 3b or figure 4c; and
- Fig. 6: shows the apparatus 2 of figure 5 with an inventive secondary preform 1s, from which a photonic fiber 8 is drawn.

### DETAILED DESCRIPTION OF THE PREFERRED EMBODIMENTS

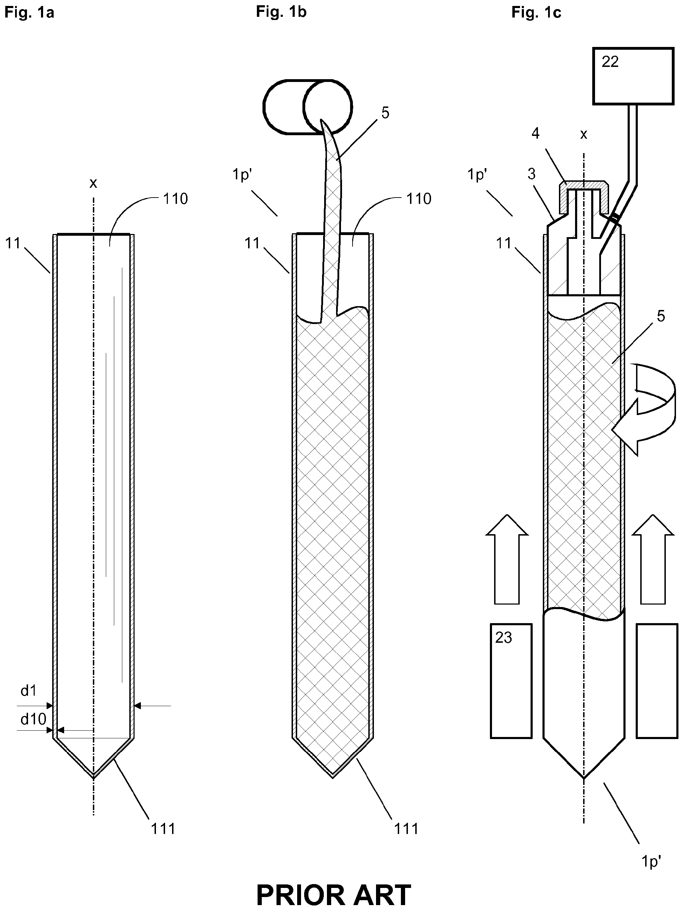

Figure 1a shows a thin-walled silica tube 11 made of SiO2 and having a primary axis x, an interior space 110 and a conical closure 111 at its lower end. The diameter d10 of the walls of the silica tube 11 is very small compared to the diameter of the silica tube 11, sold that a relatively large part of the preform will consist of high-quality silica grain.

Figure 1b shows the silica tube 11 of figure 1a with the interior space 110 being completely filled with silica grain 5 in order to obtain an unprocessed primary preform 1p'. As shown in figure 1b the filling process is not accompanied by a heating process.

Figure 1c shows the unprocessed primary preform 1p' of figure 1b being closed by means of an adjoiner 3. The adjoiner 3 comprises a first and the second channel 31; 32. The first channel 31, which is designed to optionally receive a primary preform 1p', 1p or a glass blank is closed by a cap 4. The second channel 32 is connected to a vacuum pump 22 that evacuates the silica tube 11 before the final process phase is performed. In the final process phase a furnace 23 is guided along the unprocessed primary preform 1p' in order to fuse the silica tube 11 and the silica grain 5 at a temperature between 2100°C and 2350°C.

With the method illustrated in figures 1b and 1c, which has previously been applied, the problem occurs that a breakage of the thin-walled silica tube 11 can occur due to the expansion of the silica grain 5. With the use of amorphous silica this problem can be reduced. However, in the event that α-Quartz would be used, then the filled mass of silica grain 5 in the silica tube 11 would heavily expand under the impact of heat possibly causing a rupture of the silica tube 11.

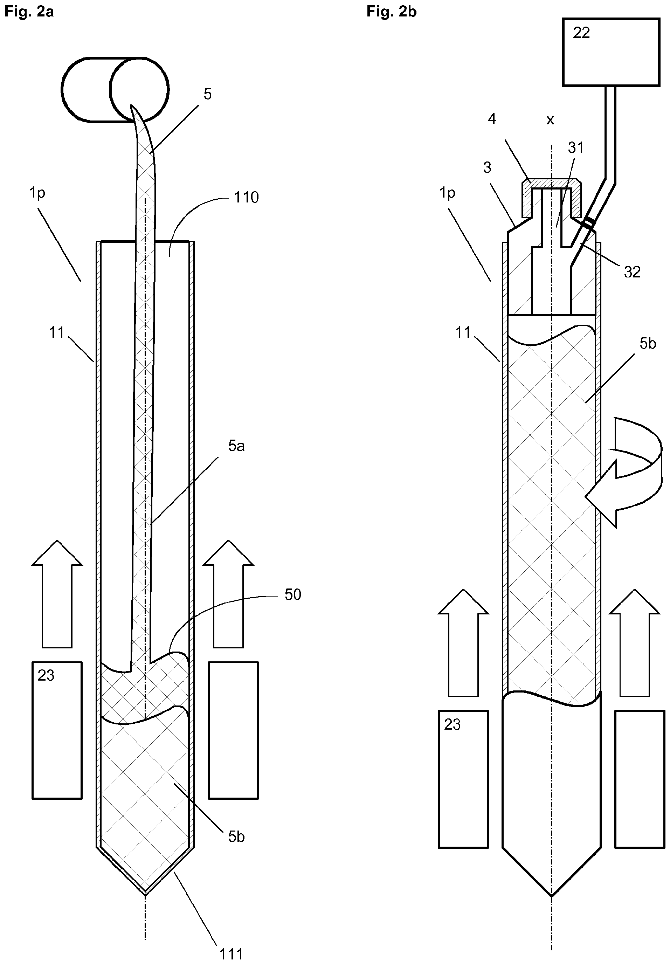

Figure 2a shows the silica tube 11 of Fig. 1a with the interior space 110 being filled with silica grain 5a, that for example is α-Quartz, which can be purchased at a relatively low price, but with high purity. Simultaneously with the filling process a heating process is performed by means of a furnace 23, which along the silica tube 11 is preferably following the fill level 50 of the silica grain 5a. As illustrated in figure 2a, the silica grain 5a that has entered the silica tube 11 changes its structure under the impact of the heat applied by the furnace 23. E.g., an intermediate process temperature of approximately 600°C is applied, under which the α-Quartz 5a is transformed to β-Quartz 5b. Higher temperatures may be applied, which transform the silica grain 5a into β-Tridymite or β-Cristobalite. The intermediate process temperature is selected according to the process parameters, particularly depending on the diameter of the walls of the silica tube 11, the placement of auxiliary silica tubes and the silica grain 5 applied. In the event that thin silica tubes, particularly auxiliary silica tubes, are applied it is recommended that transform the α-Quartz or β-Quartz into β-Tridymite or β-Cristobalite.

The material density of the silica grain 5b is therefore reduced and changed to a lower level. The resulting unprocessed primary preform 1p can therefore be processed in the final process phase shown in figure 2b with a significantly reduced risk of process failure.

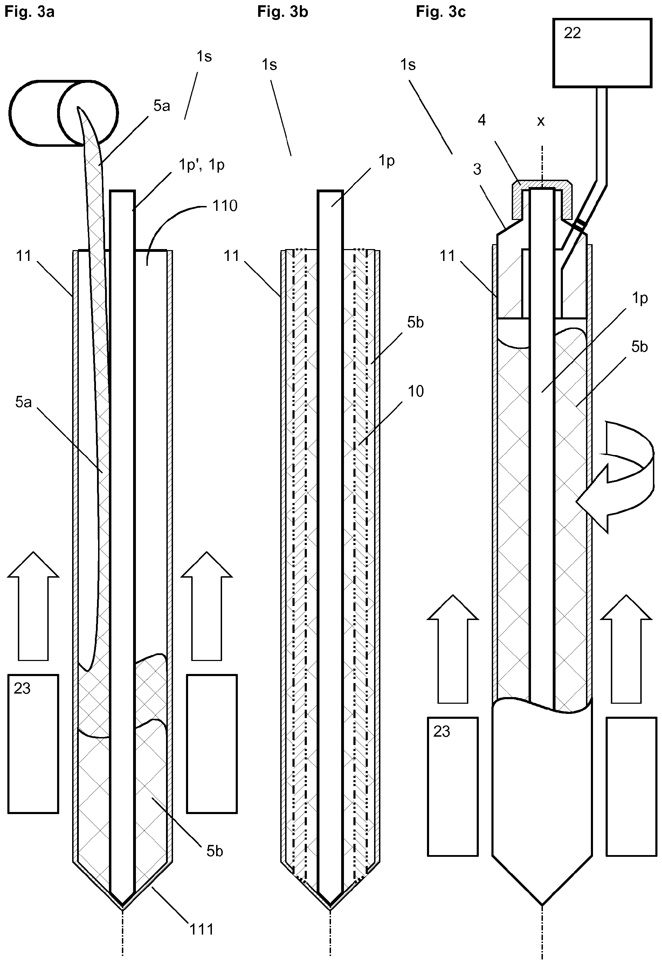

Figure 3a shows the silica tube 11 of figure 1a with a primary preform 1p, 1p' in the interior space 110 of the silica tube 11 that is being filled with grain 5a, e.g. α-Quartz. Preferably, the processed primary preform 1p resulting from the final process phase shown in figure 2b is entered into the silica tube 11. However any other primary preform 1p such as a high-quality glass blank, produced e.g. with the modified chemical vapor deposition process (MCVD), the outside vapour deposition process (OVD) or the vapour-axial deposition process (VAD), can be used.

As described in conjunction with figure 2a, simultaneously with the filling process a heating process is performed by means of a furnace 23, which along the silica tube 11 is following the fill level 50 of the silica grain 5a in order to achieve the desired change of the structure of the silica grain 5a.

Figure 3b shows the unprocessed secondary preform 1s of Fig. 3a after completion of the preliminary process phase that has been performed according to the inventive method. In this state the preform can be cooled down and delivered to another site, there the final process phase and the drawing processes are performed. Alternatively, the unprocessed secondary preform 1s can immediately be further processed, e.g. before it is cooled down.

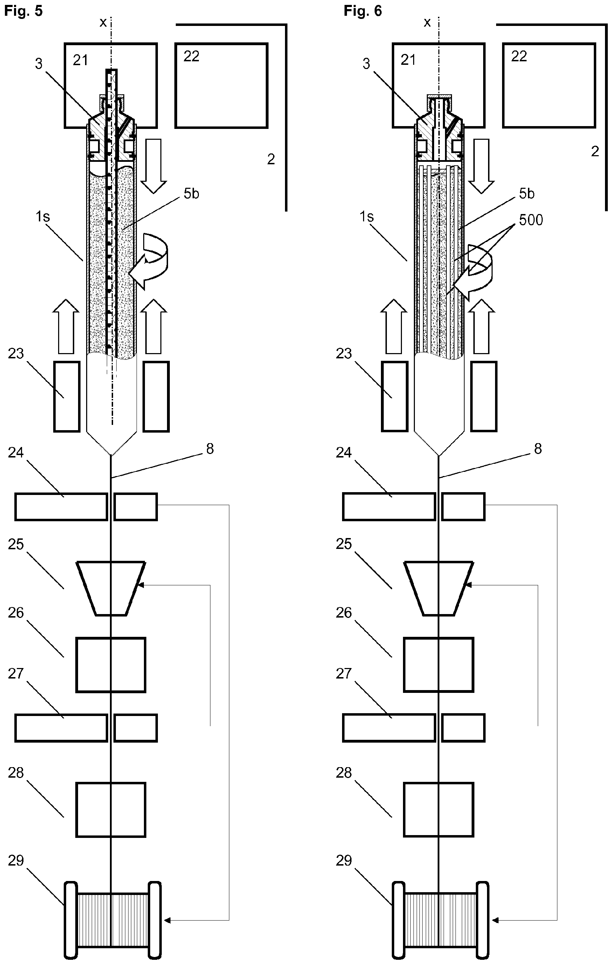

As shown in figure 3b, the unprocessed secondary preform 1s may optionally comprise auxiliary silica tubes 10 or removable rods preferably made of carbon that define longitudinal cylindrical spaces or voids within the secondary preform 1s. From secondary preforms 1s of this kind, photonic fibers 8 can be drawn as shown in figure 6.

Figure 3c shows the unprocessed secondary preform 1s of figure 3b with the silica tube 11 being closed and evacuated as described in conjunction with figure 2a. A furnace 23 is guided along the secondary preform 1s in order to fuse the silica tube 11 and the thermally pre-treated grain 5b at a temperature between 2100°C and 2350°C subsequently obtaining the processed secondary preform 1s.

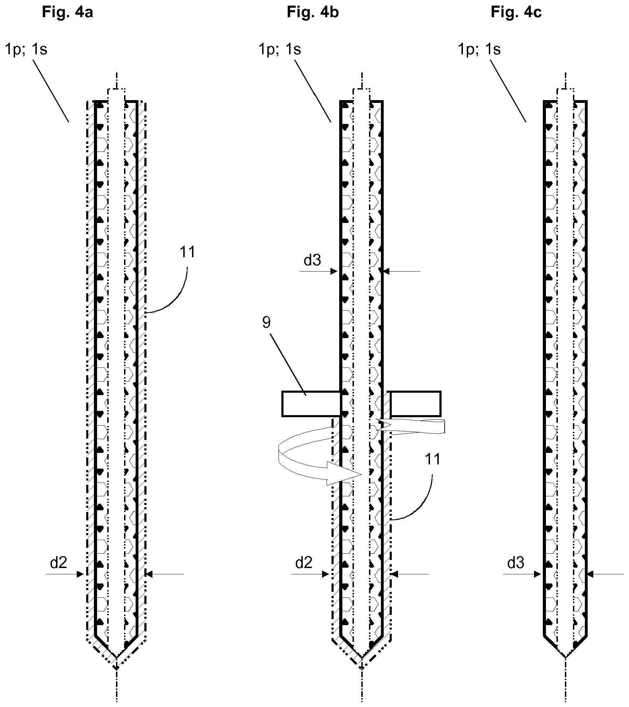

Figures 4a-4c show the mechanical treatment of the heat processed primary preform 1p of figure 2b or the secondary preform 1s of figure 3c. During this mechanical treatment a peripheral layer is removed, which consists of material originating from the silica tube 11 that may not have the desired quality. Figure 4a shows the processed primary or secondary preform 1p or 1s before the treatment. Figure 4b shows the processed primary or secondary preform 1p; 1s during the grinding process, preferably executed by an automated grinding tool. Figure 4c shows the processed primary preform 1 after the completion of the grinding process, which is recommended to be performed in the event, that the material of the primary silica tube 11 does not favourably contribute to the properties of primary preform 1 or the optical fibers derived therefrom.

Figure 5 shows an apparatus 2 used for drawing an optical fiber 8 from an inventive secondary preform 1s as shown in figure 3b or figure 4c. As stated above, the drawing process can be performed simultaneously with or after the final process phase as shown in figure 3c.

Once the lower end of the secondary preform 1s has been heated to its melting point and a fiber 8 has been pulled, an angular area called "neck-down" is formed. A single optical fiber 8 emerges from the secondary preform 1s in a semi-molten state and passes through a diameter monitor 24. The optical fiber 8 continues to be pulled downward and passes through a coating applicator 25 that applies a coating to protect the optical fiber 8. The optical fiber 8 also passes through other units 26, 27 that cure the optical coating and monitor the overall diameter after the coating has been applied. The optical fiber 8 then encounters a spinning apparatus 28 which may comprise a roller that imparts a spin into the optical fiber 8. The optical fiber 8 then eventually encounters a series of rollers (not shown) pulling the optical fiber 8 before it is then wrapped around a drum or spool 29. The secondary preform 1s is mounted in a holding device 21, which allows controlled vertical movement along and preferably rotation around its axis.

Furthermore the holding device 21 of the apparatus 2, which can be used in the preliminary process phase and in the final process phase, may be designed to apply a vibration onto the installed preform 1p, 1s in order to condense the silica grain 5a, 5b.

Figure 6 shows the apparatus 2 used for drawing an inventive optical fiber 8, such as a photonic crystal fiber from a secondary preform 1s that comprises longitudinal cylindrical voids 500 that originate from auxiliary silica tubes or rods, e.g. carbon rods that have been removed after the preliminary or final process phase.

### REFERENCES:

[1] Mool C. Gupta, Handbook of PHOTONICS, CRC Press, 1997 Boca Raton, chapter 10.7, pages 445-449
[2] US 2007/214841 A1
[3] WO 2005/102947 A
[4] R. Renner-Erny, L. Di Labio et al: "A novel Technique for active fibre production" OPTICAL MATERIALS, ELSEVIER SCIENCE PUBLISHERS B.V. AMSTERDAM, NL, no. 29, pages 919-922
[5] L. Di Labio et al: "Broadband emission from a multicore fiber fabricated with granulated oxides", APPLIED OPTICS, OSA, OPTICAL SOCIETY OF AMERICA, WASHINGTON, DC, vol. 47, no. 10, pages 1581-1584

## Claims

1. Method for producing and processing a preform (1p, 1s), comprising:
a preliminary process phase, in which silica grain (5a;5b) is supplied into the interior space (110) of a silica tube (11) having an open upper end and a closed lower end (111), in order to obtain an unprocessed preform (1p, 1s), and
a final process phase, in which the interior space (110) of the silica tube (11) is closed, a condition of reduced pressure is generated, the unprocessed preform (1p, 1s), is heated with a final process temperature in order to fuse the silica tube (11) and the silica grain (5b); **characterized in that**
during the preliminary process phase, the silica grain (5a;5b) entering the interior space (110) is thermally treated with an intermediate processing temperature that lies under the melting point of the silica grain (5a; 5b), and selecting the intermediate temperature in the range between 576°C to 1470°C.

2. Method according to claim 1, comprising the steps of:
following the fill level of the silica grain (5a; 5b) during the preliminary process phase with a furnace (23) that is heating the silica tube (11) and the silica grain (5a; 5b) in the region of the fill level.

3. Method according to claim 1 or 2, comprising the step of:
rotating the silica tube (11) during the filling process with a speed between 50 to 120 turns per minute.

4. Method according to one of the claims 1-3, comprising the steps of:
cooling and removing the unprocessed preform (1p, 1s) after completion of the preliminary process phase and reinstalling the unprocessed preform (1p, 1s) at the same or another site in order to perform the final process phase.

5. Method according to one of the claims 1-3, comprising the steps of:
starting the final process phase after completion of the preliminary process phase and before the unprocessed preform (1p, 1s) has been cooled down.

6. Method according to one of the claims 1 to 5, comprising the steps of:
inserting a primary preform or a silica blank into the silica tube (11) and supplying silica grain (5a) in the preliminary process phase into the interior space (110) of the silica tube (11) in order to obtain unprocessed secondary preform (1s).

7. Method according to one of the claims 1-5, comprising the steps of:
inserting auxiliary silica tubes or auxiliary removable rods, being arranged in an at least substantially two-dimensionally periodic structure, into the silica tube (11) in order to obtain an unprocessed secondary preform (1s) that is dedicated to the production of photonic fibers (8).

8. Method according to one of the claims 1-7, comprising the steps of:
using α-Quartz as the silica grain (5a) that is transformed under the impact of the intermediate process temperature into β-Quartz (5b), or into β-Tridymite (5b) or β-Cristobalite (5b).

9. Method according to one of the claims 1-8, comprising the steps of:
cooling and removing the processed secondary preform (1s) after completion of the final process phase and reinstalling the processed secondary preform (1s) at the same or another site for drawing an optical fiber (8) from the secondary preform (1s).

10. Method according to one of claims 1-8, comprising the steps of:
simultaneously drawing an optical fiber (8) from the secondary preform (1s) while the silica tube (11) and the silica grain (5b) are fused.

## Patentansprüche

1. Verfahren zum Herstellen und Bearbeiten einer Preform (1p, 1s), das umfasst:
eine vorbereitende Prozessphase, in der körniges Siliziumoxid (5a; 5b) in den Innenraum (110) einer Röhre (11) aus Siliziumoxid eingeleitet wird, die ein offenes oberes Ende und ein geschlossenes unteres Ende (111) hat, um eine unbearbeitete Preform (1p, 1s) herzustellen, sowie
eine abschließende Prozessphase, in der der Innenraum (110) der Röhre (11) aus Siliziumoxid verschlossen wird, ein Zustand reduzierten Drucks hergestellt wird, die unbearbeitete Preform (1p, 1s) auf eine abschließende Prozesstemperatur erhitzt wird, um die Röhre (11) aus Siliziumoxid und das körnige Siliziumoxid (5b) zu verschmelzen;
**dadurch gekennzeichnet, dass**
während der vorbereitenden Prozessphase das körnige Siliziumoxid (5a; 5b), das in den Innenraum (110) gelangt, thermisch mit einer Zwischen-Prozesstemperatur behandelt wird, die unter dem Schmelzpunkt des körnigen Siliziumoxids (5a; 5b) liegt, und die Zwischen-Temperatur in dem Bereich zwischen 576 °C und 1470 °C ausgewählt wird.

2. Verfahren nach Anspruch 1, das die folgenden Schritte umfasst:
Verfolgen der Füllhöhe des körnigen Siliziumoxids (5a; 5b) während der vorbereitenden Prozessphase mit einem Ofen (23), der die Röhre (11) aus Siliziumoxid und das körnige Siliziumoxid (5a; 5b) in dem Bereich der Füllhöhe erhitzt.

3. Verfahren nach Anspruch 2, das den folgenden Schritt umfasst:
Drehen der Röhre (11) aus Siliziumoxid während des Füllprozesses mit einer Geschwindigkeit zwischen 50 und 120 Umdrehungen pro Minute.

4. Verfahren nach einem der Ansprüche 1-3, das die folgenden Schritte umfasst:
Kühlen und Entnehmen der unbearbeiteten Preform (1p, 1s) nach Abschluss der vorbereitenden Prozessphase und erneutes Installieren der unbearbeiteten Preform (1p, 1s) an der gleichen oder einer anderen Position zum Durchführen der abschließenden Prozessphase.

5. Verfahren nach einem der Ansprüche 1-3, das die folgenden Schritte umfasst:
Beginnen der abschließenden Prozessphase nach Abschluss der vorbereitenden Prozessphase und vor Abkühlen der unbearbeiteten Preform (1b, 1s).

6. Verfahren nach einem der Ansprüche 1 bis 5, das die folgenden Schritte umfasst:
Einsetzen einer primären Preform oder eines Rohlings aus Siliziumoxid in die Röhre (11) aus Siliziumoxid und Einleiten von körnigem Siliziumoxid (5a) in der vorbereitenden Prozessphase in den Innenraum (110) der Röhre (11) aus Siliziumoxid, um eine unbearbeitete sekundäre Preform (1s) herzustellen.

7. Verfahren nach einem der Ansprüche 1-5, das die folgenden Schritte umfasst:
Einsetzen von Hilfs-Röhren aus Siliziumoxid oder entnehmbaren Hilfs-Stangen, die in einer wenigstens im Wesentlichen zweidimensionalen periodischen Struktur angeordnet sind, in die Röhre (11) aus Siliziumoxid, um eine unbearbeitete sekundäre Preform (1s) herzustellen, die für die Produktion von photonischen Kristallfasern (8) bestimmt ist.

8. Verfahren nach einem der Ansprüche 1-7, das die folgenden Schritte umfasst:
Verwenden von α-Quarz als das körnige Siliziumoxid, das unter der Wirkung der Zwischen-Prozesstemperatur zu β-Quarz (5b) oder zu β-Tridymit (5b) oder β-Cristobalit (5b) umgewandelt wird.

9. Verfahren nach einem der Ansprüche 1-8, das die folgenden Schritte umfasst:
Kühlen und Entnehmen der bearbeiteten sekundären Preform (1s) nach Abschluss der abschließenden Prozessphase und erneutes Installieren der unbearbeiteten Preform (1s) an der gleichen oder einer anderen Position zum Ziehen einer Lichtleitfaser (8) aus der sekundären Preform (1s).

10. Verfahren nach einem der Ansprüche 1-8, das die folgenden Schritte umfasst:
simultanes Ziehen einer Lichtleitfaser (8) aus der sekundären Preform (1s), während gleichzeitig die Röhre (11) aus Siliziumoxid und das körnige Siliziumoxid (5b) verschmolzen werden.

## Revendications

1. Procédé de production et de traitement d'une préforme (1p, 1s), comprenant :
une phase opératoire préliminaire, dans laquelle des grains de silice (5a ; 5b) sont fournis dans l'espace intérieur (110) d'un tube en silice (11) ayant une extrémité supérieure ouverte et une extrémité inférieure fermée (111), afin d'obtenir une préforme non traitée (1p, 1s), et
une phase opératoire finale, dans laquelle l'espace intérieur (110) du tube en silice (11) est fermé, un état de pression réduite est créé, la préforme non traitée (1p, 1s) est chauffée à une température opératoire finale afin de fusionner le tube en silice (11) et les grains de silice (5b) ; **caractérisé en ce que**
pendant la phase opératoire préliminaire, les grains de silice (5a ; 5b) entrant dans l'espace intérieur (110) sont traités thermiquement à une température de traitement intermédiaire qui se trouve sous le point de fusion des grains de silice (5a ; 5b), et le choix de la température intermédiaire dans la plage entre 576 °C et 1470 °C.

2. Procédé selon la revendication 1, comprenant les étapes consistant à :
suivre le niveau de remplissage des grains de silice (5a ; 5b) pendant la phase opératoire préliminaire avec un four (23) qui chauffe le tube en silice (11) et le grain de silice (5a ; 5b) dans la région du niveau de remplissage.

3. Procédé selon la revendication 1 ou 2, comprenant l'étape consistant à :
faire tourner le tube en silice (11) pendant l'opération de remplissage à une vitesse entre 50 et 120 tours par minute.

4. Procédé selon l'une des revendications 1 à 3, comprenant les étapes consistant à :
refroidir et retirer la préforme non traitée (1p, 1s) après la fin de la phase opératoire préliminaire et réinstaller la préforme non traitée (1p, 1s) au même ou à un autre endroit afin d'exécuter la phase opératoire finale.

5. Procédé selon l'une des revendications 1 à 3, comprenant les étapes consistant à :
démarrer la phase opératoire finale après la fin de la phase opératoire préliminaire et avant que la préforme non traitée (1p, 1s) ait été refroidie.

6. Procédé selon l'une des revendications 1 à 5, comprenant les étapes consistant à :
insérer une préforme primaire ou une ébauche en silice dans le tube en silice (11) et fournir des grains de silice (5a) lors de la phase opératoire préliminaire dans l'espace intérieur (110) du tube en silice (11) afin d'obtenir une préforme secondaire non traitée (1s).

7. Procédé selon l'une des revendications 1 à 5, comprenant les étapes consistant à :
insérer des tubes en silice auxiliaires ou des barreaux amovibles auxiliaires, qui sont disposés suivant une structure périodique au moins sensiblement bidimensionnelle, dans le tube en silice (11) afin d'obtenir une préforme secondaire non traitée (1s) qui est destinée à la production de fibres photoniques (8).

8. Procédé selon l'une des revendications 1 à 7, comprenant les étapes consistant à :
utiliser du α-Quartz en tant que grains de silice (5a) lequel est transformé sous l'effet de la température opératoire intermédiaire en β-Quartz (5b), ou en β-Tridymite (5b) ou en β-Cristobalite (5b).

9. Procédé selon l'une des revendications 1 à 8, comprenant les étapes consistant à :
refroidir et retirer la préforme secondaire traitée (1s) après la fin de la phase opératoire finale et réinstaller la préforme secondaire traitée (1s) au même ou à un autre endroit afin d'étirer une fibre optique (8) à partir de la préforme secondaire (1s).

10. Procédé selon l'une des revendications 1 à 8, comprenant les étapes consistant à :
étirer simultanément une fibre optique (8) à partir de la préforme secondaire (1s) tandis que le tube en silice (11) et les grains de silice (5b) sont fusionnés.
